(19) Europäisches Patentamt
European Patent Office
Office européen des brevets

(11) **EP 3 600 636 B1**

(12) **EUROPEAN PATENT SPECIFICATION**

(45) Date of publication and mention
of the grant of the patent:
**15.04.2026 Bulletin 2026/16**

(21) Application number: **17714758.4**

(22) Date of filing: **31.03.2017**

(51) International Patent Classification (IPC):
**B01D 69/12** (2006.01)    **B01D 67/00** (2006.01)
**B01D 71/02** (2006.01)    **B01D 71/28** (2006.01)
**B01D 71/80** (2006.01)

(52) Cooperative Patent Classification (CPC):
**B01D 69/122; B01D 53/228; B01D 71/0211;**
**B01D 71/281; B01D 71/283;** B01D 71/80;
B01D 2256/16; B01D 2256/24; B01D 2256/245;
B01D 2257/504; B01D 2257/7022; B01D 2323/081;
B01D 2323/64; Y02C 20/40

(86) International application number:
**PCT/EP2017/057684**

(87) International publication number:
**WO 2018/177533 (04.10.2018 Gazette 2018/40)**

(54) **ULTRAHIGH FLUX GAS-SELECTIVE NANOPOROUS CARBON MEMBRANE AND MANUFACTURING METHOD THEREOF**

GASSELEKTIVE NANOPORÖSE KOHLENSTOFFMEMBRAN MIT ULTRAHOHEM FLUSS UND HERSTELLUNGSVERFAHREN DAFÜR

MEMBRANE DE CARBONE NANOPOREUSE À SÉLECTIVITÉ GAZEUSE ULTRA-ÉLEVÉE ET SON PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**05.02.2020 Bulletin 2020/06**

(73) Proprietor: **Ecole Polytechnique Fédérale de Lausanne (EPFL)**
**1015 Lausanne (CH)**

(72) Inventors:
• **DAKHCHOUNE, Mostapha**
**1950 Sion (CH)**
• **HUANG, Shiqi**
**1950 Sion (CH)**

• **DUDANI, Nikunj**
**1950 Sion (CH)**
• **AGRAWAL, Kumar Varoon**
**1950 Sion (CH)**
• **HE, Guangwei**
**1950 Sion (CH)**

(74) Representative: **KATZAROV S.A.**
**Geneva Business Center**
**12 Avenue des Morgines**
**1213 Petit-Lancy (CH)**

(56) References cited:
**WO-A2-2007/024241    JP-A- 2013 107 789**
**US-A1- 2012 258 311    US-A1- 2013 192 460**

**Description**

**Technical Field**

The present invention relates to a defect-free high flux gas-selective nanoporous carbon membrane and a manufacturing method thereof.

**Background of the art**

In order to drive to a clean and sustainable energy future, our world requires independence from the fossil fuel resources, e.g. oil or the same. However, even in the year 2015, 80% of the world energy was sourced from the fossil fuels, increasing the need for energy-efficient $CO_2$ capture devices and processes. At the same time, production of $H_2$ is predominantly (96%) carried out by the reforming of carbon feedstock, producing CO and $CO_2$ as byproducts, and therefore requires a process for the energy-efficient purification of $H_2$ as well.

Membrane-based separation processes are highly attractive and have been predicted to cut down the energy consumption in industrial separations by up to 90%. In comparison to the packed bed adsorption processes which are often limited by the overall flow rate, the membrane processes facilitate continuous high-flow operation with a low demand for the expensive thermal energy.

In general, the energy-efficient membranes must have an economical capital and operating expenditures (CAPEX and OPEX, respectively), a mechanical, chemical and thermal stability at the operating conditions, and a high selectivity for the molecule of interest.

The capital expenditures (CAPEX) is determined by the material cost and the overall membrane area needed to handle a certain separation (Eq. 1).

$$\text{CAPEX} = C_{specific} \text{ x } A_{overall} \qquad \text{Eq. 1}$$

$$A_{overall} = Q/J \qquad \text{Eq. 2}$$

where $C_{specific}$ is cost of membrane module per unit area (USD/m$^2$),

$A_{overall}$ is the total area of the membrane (m$^2$),

Q is the target flow rate of the molecule of interest (mol/s), and

$J$ is membrane flux (mol/m$^2$-s) at the given operating conditions which typically involves transmembrane pressure difference $\Delta P$, temperature $T$, and the concentration of molecules fed to the membrane.

Traditionally, the polymeric membranes have dominated the membrane-based separations, thanks to their high processability and a low $C_{specific}$ (USD 10-100 per m$^2$). However, their permeance, defined as $J/\Delta P$, is limited by an inherent performance bounds. The conventional polymeric membranes have permeance of the order of 100 gas permeation unit (GPU), where 1 GPU is equivalent to 3.3 x 10$^{-10}$ mol/m$^2$-s-Pa.

A straight forward approach to reduce the CAPEX is therefore to improve the membrane permeance.

The membrane permeance is dependent on its thickness which determines the diffusional path length of the molecules, and the membrane-molecule interactions. In general, high permeance can be achieved by reducing membrane thickness, however, below a certain thickness, it is difficult to maintain molecular selectivity due to increasingly high difficulty in avoiding defects in thinner films.

In order to provide a membrane with high permeance, a two-atom-thick (bilayer) graphene membrane has been developed recently. This membrane showed a high permeance (30.9 million GPU or 1.0 x 10$^{-2}$ mol/m$^2$-s-Pa) and a moderate $H_2/CO_2$ selectivity of 2.5. The ultrahigh permeance of this membrane is due to the infinitesimally small diffusional path of molecules through bilayer graphene. However, a problem of this membrane is that despite the attractive membrane performance, the bilayer graphene membrane presents a tedious fabrication process involving a time-consuming and expensive focused ion beam (FIB) based nanopore drilling. Further, a crack-free membrane is not easy to obtain and therefore there is a need for a crack-free membrane manufacturing method.

There is therefore a need for a high quality membrane and reliable manufacturing method of the same.

In this regard, a primary object of the invention is to solve the above-mentioned problems and more particularly to provide a high-flux, gas selective, films presenting an ultrahigh hydrogen permeance and a moderate $H_2/CO_2$ selectivity to

be used as a membrane.

Moreover, another project of the invention is to provide a membrane manufacturing method which is highly scalable, and which permits the membrane to potentially drastically reduce its CAPEX for hydrogen purification while the manufacturing method reliably provides very thin membranes with no cracks.

A further object of the invention is a manufacturing method providing a membrane with no drilling post-treatment.

A further object of the invention is to provide a membrane which remains stable at high $\Delta P$ such as up to 4 bar, and high temperature such as up to 250 °C.

WO 2007/024241 A2 relates to a carbon membrane made by carbonizing poly(styrene-block-(4vinylpyridine)) on a silica plate.

## Summary of the invention

The above problems are solved by the present invention, as defined in the appended claims.

A first aspect of the invention is a nanoporous carbon membrane manufacturing method as defined in claim 1.

Thanks to this, we can easily and reliably manufacture an NPC membrane with no cracks.

According to a preferred embodiment of the present invention, the method further comprises a dissolving step prior to the coating step wherein the copolymer is dissolved in an organic solvent at a concentration of 1-20 % to form a coating solution. Thus, the coating step can be carried out by using efficient techniques such as spin coating, dip coating or the like.

Advantageously, the method further comprises a homopolymer adding step prior to the coating step and comprising adding a homopolymer to the coating solution and then heating the coating solution. This embodiment is particularly adapted for changing the relative block sizes upon their separation.

According to the invention, the pyrolysis step is carried out after the transfer step. In this manner, the manufacturing method is adjustable to different kind of protocols.

Advantageously, the coating step is followed by a cooling step presenting a cooling rate of 1°C/minute or lower. In this manner, cracks can be further entirely prevented.

Preferably, the etchant bath is a sodium persulfate solution, 20% w/w to avoid bubbles or contamination in comparison of when ammonium persulfate or Iron chloride is used. Thus, etching of the sacrificial foil is enhanced while the support is not attacked when in contact.

According to the present invention, the block copolymer is poly(styrene-b-4-vinyl pyridine). This embodiment is particularly adapted for providing a proper NPC once pyrolized.

Advantageously, the sacrificial substrate is at least one of a Copper foil, or any other metal foil, a semiconducting element wafer and ceramics. Thanks to this a sufficiently rigid backup is provided which can be easily etched.

Preferably, the sacrificial substrate is a 25 $\mu$m thick Copper foil. In this manner, this thickness has shown particularly good results in term of back-up properties and etching period.

A second aspect of the invention is a nanoporous carbon membrane manufactured by the method of the first aspect of the invention. The particular advantages of this device of the invention being similar to the ones of the method of the first aspect of the invention, they will not be repeated here.

According to a preferred embodiment of the present invention, the NPC film presents a thickness of 10-500 nm. This thickness provided an excellent permeance to the membrane.

Advantageously, the NPC film presents a pore diameter in the range of 10-50 nm covering more than 50% of the NPC film area. Thanks to this the selectivity is further improved.

Preferably, the porous support is a laser drilled tungsten support with support pores 5-100 micron in size. In this manner, this type of support has shown particularly good resistance to the etching while providing an exceptional membrane support property.

According to a preferred embodiment of the present invention, the laser drilled tungsten support us 50 $\mu$m thick. This embodiment is particularly adapted for the intended membrane manufacture. Thinner support is desired for higher flux.

## Brief description of the drawings

Further particular advantages and features of the invention will become more apparent from the following non-limitative description of at least one embodiment of the invention which will refer to the accompanying drawings, wherein

- Figure 1 is a block diagram representing an embodiment of the present invention,

- Figure 2 is a SEM image of an NPC film with uncontrolled cooling,

- Figure 3 is a SEM image of an NPC film with controlled cooling,

- Figure 4 is a high magnification SEM image of the Cu supported NPC film,

- Figure 5 is an image of the apparatus carrying out the wet-transfer process,

- Figure 6 is a schematic diagram representing the wet-transfer process,

- Figures 7ia and 7ib are SEM images of the NPC film coated LDT support,

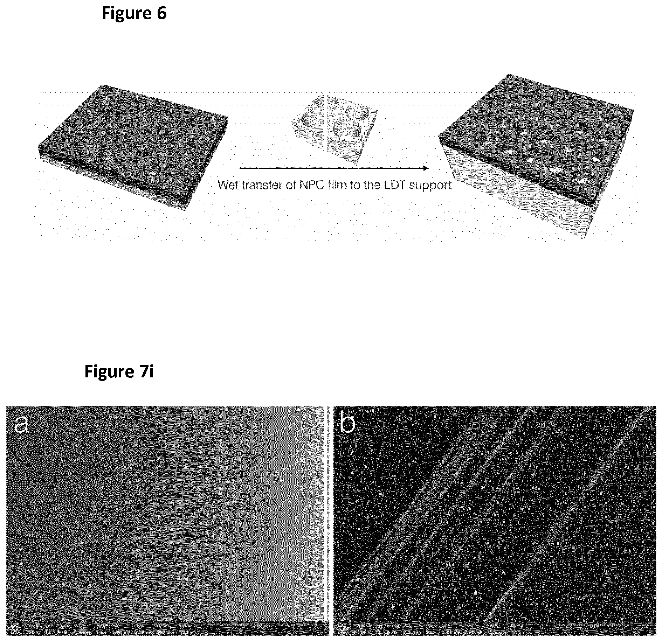

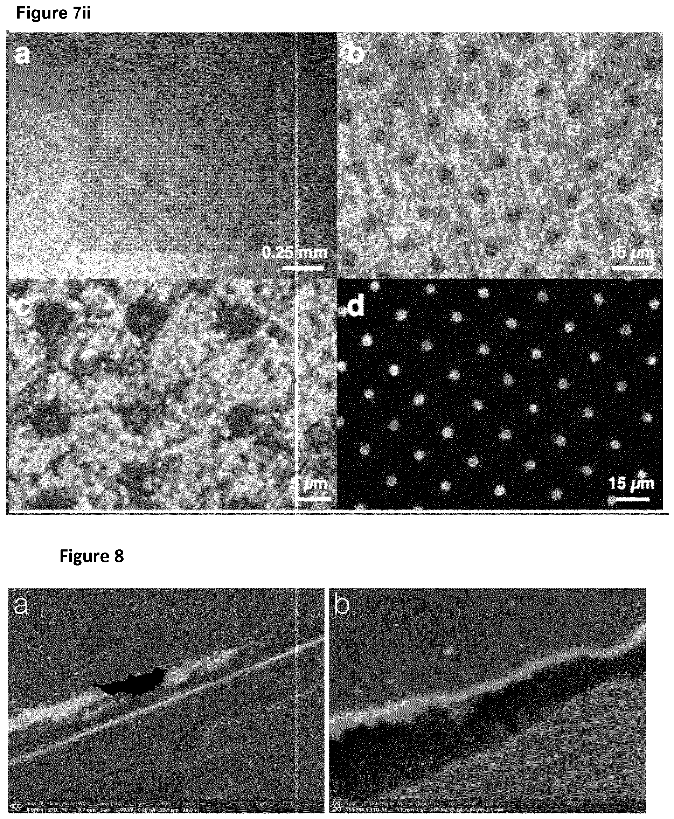

- Figures 7iia-d are optical images of the NPC film coated LDT support,

- Figures 8a and 8b are SEM images showing cross-section of NPC film on top a 5 $\mu$m diameter pore of the LDT support,

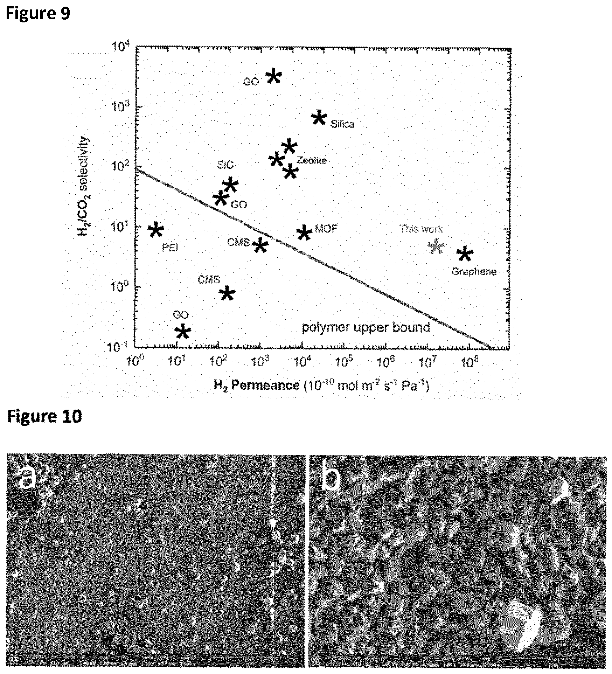

- Figure 9 is a plot comparing the $H_2/CO_2$ selectivity and the $H_2$ permeance of different NPC films,

- Figures 10a and 10b are SEM images of a thin ZIF-8 film,

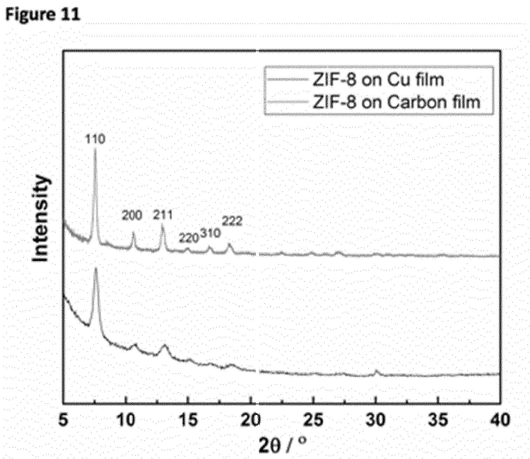

- Figure 11 is an X-ray diffraction (XRD) pattern of a ZIF-8 film on the NPC film and the Cu foil.

## Detailed description of the invention

The present detailed description is intended to illustrate the invention in a non-limitative manner since any feature of an embodiment may be combined with any other feature of a different embodiment in an advantageous manner.

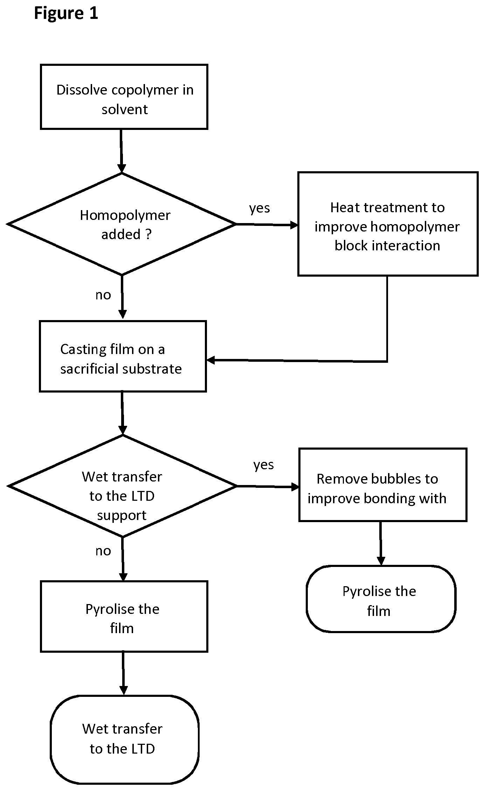

Figure 1 shows a block diagram representing the nanoporous carbon membrane manufacturing method of the present invention comprising a dissolving step prior to the coating step wherein a block copolymer is dissolved in an organic solvent to form a coating solution, a homopolymer adding step prior to the coating step and comprising adding a homopolymer to the coating solution and then heating the coating solution, a coating step comprising coating a block copolymer film on a sacrificial non-porous substrate, preferably one of a Copper foil, a semiconducting element wafer and ceramics, so as to prepare an block copolymer film coated foil, wherein said block copolymer comprises hydrophilic and hydrophobic blocks, and followed by a cooling step, a transfer step comprising transferring the said block copolymer film on a porous support, a pyrolysis step which can be carried out before or after the transfer step and comprising pyrolizing the block copolymer film at a temperature higher than 400 °C in an inert atmosphere to form a nanoporous carbon film, and when the pyrolysis is carried out after the transfer step, a bubble removing step removing is carried out before the pyrolysis step, wherein the transfer step consists in a wet-transfer process comprising the steps of placing the block copolymer film coated foil in an etchant bath, which is preferably a sodium persulfate solution, 20% w/w, in an etching chamber and the porous support within said etching chamber above the height of said etching bath, etching the underlying sacrificial foil of block copolymer film coated foil, raising the height of the etching bath above the porous support once the sacrificial foil etching is completed, bringing the free-floating etched block copolymer film on top of the porous support, and lowering the etching bath height below the porous support height so as to deposit the etched copolymer film on top of the porous support. Thanks to this, we can easily and reliably manufacture an NPC membrane with no cracks.

This method provides a nanoporous carbon membrane where the NPC film presents a thickness of 10-500 nm and a pore diameter in the range of 10-50 nm covering more than 50% of the NPC film area.

Briefly, according to a preferred embodiment of the invention, the nanoporous carbon (NPC) film is prepared by controlled pyrolysis of a block copolymer film on a sacrificial substrate. This is a first aspect of the invention.

More particularly, the block copolymer comprises a hydrophobic and a hydrophilic blocks to facilitate phase separation (also termed as self-assembly). Typically, the block copolymer is dissolved in a good organic solvent with a concentration of 1-20%. Then another homopolymer can be added to tune the self-assembly I.e. changing the relative block sizes upon phase separation of domains if needed. As mentioned, if the homopolymer is added, then the solution is heat treated to improve the interaction of the homopolymers with one of the blocks of the copolymer.

Thereafter, the solution is coated on a sacrificial substrate made of at least one of metals like Tungsten, semiconducting elements like Si wafer, ceramics, or the like, by evaporation induced self-assembly (EISA) techniques such as spin coating, dip coating, casting etc.

The NPC film is then finally obtained by carrying out a pyrolysis of this coating at a temperature higher than 400 degree °C in presence of an inert atmosphere, obtained using a flow of noble gas such as argon or helium, with or without hydrogen. Typically, pyrolysis is carried out in a furnace with gas residence time ranging from 1 second - 10 minutes. The pyrolysis yields a carbon film. Concomitantly, during the pyrolysis, one of the domain is completely removed, leading to introduction of nanoporosity in the film.

In order to manufacture an ultrahigh flux gas-selective nanoporous carbon membrane, the defect-free NPC film has to be then transferred to a support. This is a second aspect of the invention which can of course be combined with the first aspect.

We remind here that pyrolysis can be carried out before or after the transfer to the macroporous support and that if carried out after, a bubble removing step shall be carried out before the pyrolysis to improve the bonding between the support and the film.

As mentioned above, transfer of a film (graphene) on a non-porous support is known but necessitates drilling as a post treatment. It therefore of great interest to transfer the NPC film thus fabricated directly on a macro-porous support.

As the macroporous support a Laser-drilled tungsten (LDT) support has shown excellent properties. Preferably it consists in a 50 $\mu$m thick macroporous tungsten support comprised of an array of 5 $\mu$m holes fabricated by laser drilling of a tungsten foil. The total area of the perforated zone was 1 mm$^2$ and consisted of ca. 2000 holes.

An example of the NPC film manufacturing method comprises adding 0.1 g of poly (styrene-b-4-vinyl pyridine) as the block copolymer and 0.2 g of turanose (98%) as the carbohydrate into 2 g of N,N-dimethylformamide (DMF). The solution was sonicated for 60-90 min for complete dissolution, and subsequently placed into a Teflon-lined stainless steel autoclave at 180 °C for three hours to enhance the hydrogen bonding between the hydrophilic pyridine segments of the block-copolymer and turanose. Following this, the solution was spin-coated at 2000 rpm for 2 min on a flat, non-porous substrate leading to a self-assembled, nanostructured film.

Conversely to what could be imagined the nanoporous film was then not annealed with any solvent. The pyrolysis was performed by heating the spin-coated substrate at 500 °C for 60 min with a heating rate of 1 °C/min under a 1 liter/min flow of argon.

Specifically, hydrogen bonding between turanose and the hydrophilic vinyl pyridine blocks constrains turanose to be confined within the hydrophilic domains, which are surrounded by hydrophobic domains (polystyrene block). During the pyrolysis, the nanostructured polymer film looses ca. 64% of its weight between 200 °C and 450 °C, mainly due to the decomposition of turanose and polystyrene

As a matter of fact, thin NPC films can be fabricated on non-porous substrates but are very difficult to be directly prepared on a porous support. Since, NPC films are extremely thin (10-500 nm thick), they are not mechanically strong to be self-supporting membranes. Therefore, NPC film require a mechanical backing of a high flux porous support for their application as membranes and membrane supports. However, fabrication of crack-free and continuous NPC film on a porous support is complicated.

Simply casting block copolymer on a porous support will not form a continuous film. The invention is therefore to fabricate NPC film on a sacrificial non-porous support followed by transfer of the NPC film to the porous support. Even then, crack-free lamination of the ultrathin NPC film on a porous support is not trivial. Another object of the present invention is therefore the preparation of a crack-free NPC film on a sacrificial metal foil followed by successful crack-free transfer of the film onto a macroporous LDT support.

Therefore, to prepare thin NPC film on the macroporous LDT support, one first synthesizes the NPC film on a sacrificial foil and then wet-transfers the film on to the macroporous LDT support.

A 25 $\mu$m thick Cu foil was chosen as the sacrificial non-porous support for preparing a continuous NPC film by spin-coating and pyrolysis. Thin Cu foils are smooth, non-expensive and can be etched in a short period. However, Cu foil leads to a high stress in the NPC film during the cooling step at the completion of pyrolysis.

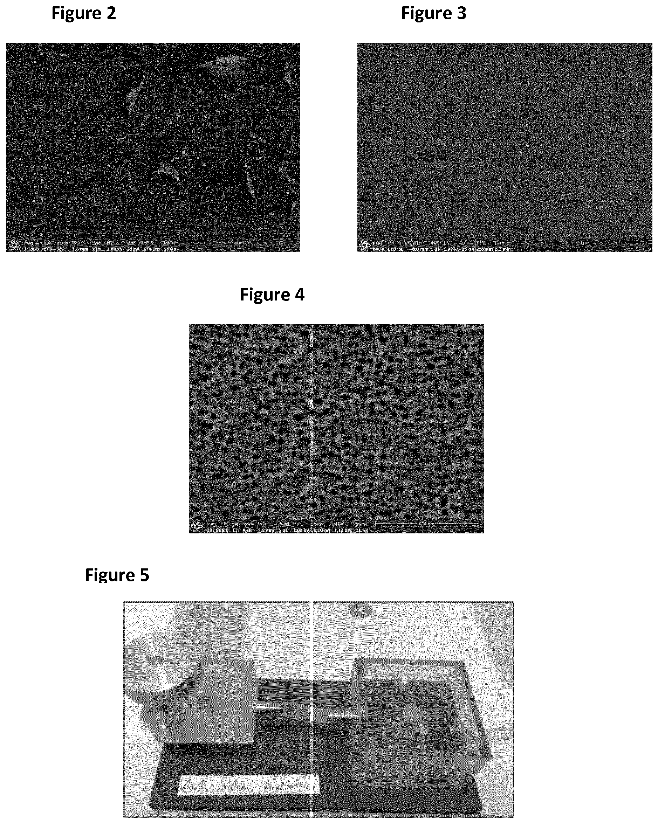

The stress in the film arises due to a large difference in the thermal expansion coefficient of copper and carbon (17 x 10$^{-6}$ /K and ca. 4 x 10$^{-6}$ /K, respectively). As a result, an uncontrolled cooling of the NPC film leads to severe cracking as shown in figure 2.

Delamination of the NPC film is clearly visible over 15-20% of the entire Cu surface. Continuous NPC domains were limited to a length scale of 50 $\mu$m. To reduce the thermal stresses during the cooling step, low cooling rates is preferred. For example, the cooling rate of 1 °C/minute, the NPC films are smooth, homogenous and crack-free. As one can is in Fig. 3, not a single crack in the entire 1 cm$^2$ area is observed.

At first, as explained above, the block-copolymer/turanose solution in DMF was spin-coated onto the 25 $\mu$m thick Cu foil (Alfa Aesar) and dried at room temperature. Pyrolysis of the polymer film was subsequently carried out in a 3-zone tubular furnace. 3-zone furnace facilitated a temperature uniformity across the entire length of the film which reduced the thermal stresses in the film during the heating and the cooling steps. Heating and cooling rates were controlled (up to 1°C/minute) to manage the thermal stresses in the film.

To transfer the NPC film onto the macroporous LDT support, one then uses a 'wet-transfer' technique. Typically, in this kind of process, a mechanically reinforcing poly-(methyl methacrylate) (PMMA) layer is overcoated on the film for the transfer step.

However, transferring the NPC film using the PMMA overcoating produces severe cracks on the film upon removal of PMMA due to a stronger interaction between the NPC-PMMA than that in NPC-tungsten.

Therefore, the transfer of NPC film has to be carried out without the mechanical backing of PMMA. However, free-floating NPC films are fragile, and therefore it is mandatory to use a transfer setup facilitating a gentle transfer of the NPC film on the LDT support. According to a further aspect of the invention, a Cu foil showed excellent results.

The underlying Cu foil was then etched in an etchant bath (20% w/w solution of sodium persulfate, Sigma-Aldrich) inside an etching chamber of the transfer setup. Following this, the free-floating NPC film was gently brought on top of macroporous LDT support. Post-transfer, the NPC film was dried at room temperature.

## Examples

### Used Apparatuses

Transport, mechanical and thermal properties of the nanostructured film were investigated through a customized permeation apparatus which was designed in-house.

For measurements from LDT supported NPC film, a constant-pressure measurement principle was employed in which $\Delta P$ of 1 bar was applied across the membrane. The permeate side was connected to a bubble flowmeter or a mass spectrometer (MS) to measure the flux of gas across the NPC film. Thermal and mechanical stabilities of the membrane were investigated up to 100 °C.

An FEI Teneo scanning electron microscope (SEM) with a high-resolution field emission column and a high-stability Schottky field emission gun was used to characterize the microstructure of membranes. Optical images were taken with an EQ-MM500T-USB microscope. X-ray diffraction pattern was obtained using Powder diffractometer Bruker D8 Discover.

### Manufacturing examples

Fabrication of NPC film on a non-porous substrate was as follows.

Although NPC film can be fabricated on non-porous substrates, synthesis of a crack-free film on porous support is not trivial. Since, NPC films are extremely thin (10-500 nm thick), they are not mechanically strong to be self-supporting membranes. Therefore, NPC film require a mechanical backing of a high flux porous support for their application as membranes and membrane supports. However, fabrication of NPC film on a porous support is not trivial. Simply casting block copolymer on a porous support will not form a continuous film. A possible alternative is to fabricate NPC film on a sacrificial non-porous support followed by transfer of the NPC film to the porous support. Even then, crack-free lamination of the ultrathin NPC film on a porous support is not trivial. The present invention demonstrates preparation of a crack-free NPC film on a sacrificial metal foil followed by successful crack-free transfer of the film onto a macroporous LDT support.

A 25 $\mu$m thick Cu foil was chosen as the sacrificial non-porous support for preparing a continuous NPC film by spin-coating and pyrolysis. Thin Cu foils are smooth, non-expensive and can be etched in a short period. However, Cu foil leads to a high stress in the NPC film during the cooling step at the completion of pyrolysis. The stress in the film arise due to a large difference in the thermal expansion coefficient of copper and carbon ($17 \times 10^{-6}$ /K and ca. $4 \times 10^{-6}$ /K, respectively). As a result, an uncontrolled cooling led of the NPC film led to severe cracking (Fig. 2). Delamination of the NPC film was clearly visible over 15-20% of the entire Cu surface. Continuous NPC domains were limited to a length scale of 50 $\mu$m. To reduce the thermal stresses during the cooling step, a low cooling rates were studied. At the cooling rate of 1 °C/minute, the NPC films were smooth, homogenous and crack-free (Fig. 3). We did not observe a single crack in the entire 1 $cm^2$ area.

Figure 4 shows a high magnification SEM image shows the uniform and nanoporous morphology of the Cu supported NPC film. The pore diameter is in the range of 10-20 nm. The pores appear to run straight, perpendicular to the film thickness. Also, the pores cover more than 50% of the film area.

Next, to transfer the carbon film onto a macroporous support, inventors have developed a wet-transfer technique which eliminated the need of a mechanically reinforcing PMMA overcoating. This is advantageous because it reduces the overall processing time and eliminates the contamination concerns from PMMA residues.

The wet-transfer technique of the present invention employs a novel transfer setup shown in figure 5, which reduces the stress in the free-floating NPC film post Cu etching which is shown in figure 5. The setup consists of a reservoir connected to an etching chamber by a flexible tube. The reservoir height is adjusted by a height adjusting means such as a screw, which in turn controls the height of etchant fluid in the etching chamber. The etching chamber which in this specific example is sized as 5 cm x 5 cm x 4 cm, comprises a flat platform for stabilizing the LDT support, and a drain valve to facilitate the fluid exchange (etchant to water) for subsequent washing of the NPC film.

The transfer process is initiated by first placing the LDT support on the platform in the etching chamber and subsequently filling the reservoir and the etching chamber with the etchant, e.g. a sodium persulfate solution in water. The etchant level is maintained well below the platform on which the LDT support sits. This is done to prevent excessive damage to the LDT support by the etchant.

Thereafter, NPC coated Cu foil is floated on the etchant solution. At the completion of Cu etching, the NPC film freely floats on the etchant surface. After completion of Cu etching, the level of etchant is increased by increasing the height of the reservoir. Ultimately, the NPC film is brought on top of the LDT support, following which the liquid level is lowered slowly by reducing the height of the reservoir. This facilitates in gentle placement of the NPC film on the LDT support. Finally, the etchant solution is drained and deionized water is filled in the chamber to wash away the residual etchant from the NPC film. The use of this wet-transfer setup allows gentle transfer of the free-floating NPC film onto the macroporous LDT support.

As of result, transfer of the NPC film can be carried out with a 100% success rate while avoiding any tears or cracks. All pores of the macroporous LDT support were covered by the NPC film. Preferably, the support presents 5 $\mu$m straight pore channels and the pore length is 50 $\mu$m. This is schematically shown in figure 6.

Fig 7ia and 7ib represent SEM images of the NPC film coated LDT support show the excellent coating uniformity. The underlying 5 $\mu$m pores of the LDT supports can be visualized owing to partial electron beam transparency of the ultrathin NPC film. The straight lines on the film shown in figure 7ib are essentially folds in the thin NPC film due to a non-perfect pinning between the support and the NPC film during the drying of the film. Despite the presence of these folded regions, the surface is continuous and crack-free, indicating that the NPC films were quite flexible. Figure 7iia-d show corresponding optical images of the LDT supported NPC film in reflection (7iia-c) and transmission mode (7iid). These images confirm the excellent conformity of the NPC film on the LDT support. Uniform light intensity across the LDT pore in the transmission mode image also confirm that film did not have cracks.

The thickness of the NPC film is revealed by some specimen which developed cracks during the wet-transfer process. Based on the SEM images shown in figure 8a and 8b showing a cracked NPC film on top a 5 $\mu$m diameter pore of the LDT support, one can estimate the film thickness to be approximately 50 nm. This represents one of the thinnest nanoporous carbon membrane reported in literature.

Results

The gas permeation experiments were conducted to study the transport properties of the nanopores of the NPC as well as their thermal and mechanical stability. Five gases ($H_2$, He, $CH_4$, $N_2$ and $CO_2$) were tested at room temperature and at 100 °C with a $\Delta$P of 1 bar. Owing to its thinness, the NPC film exhibited an extremely high permeance (higher than 1 million GPU for all the gases, Table 1) much higher than the state-of-the-art polymeric membranes which perform with a permeance of the order of 100 GPU.

Therefore, 1 mm$^2$ of the NPC membrane as fabricated here is equivalent to 100 cm$^2$ of the polymeric membrane in terms of area needed to achieve a certain gas flux. Similarly, just a cm$^2$ of the NPC membrane will be equivalent to 1 m$^2$ of the polymeric membrane.

**Table 1:** Single gas permeance data from the LDT supported NPC film.

| | Molecular Weight [g/mole] | Permeance [mol/m$^2$-s-Pa] | Permeance [GPU] |
|---|---|---|---|
| **Hydrogen** | 2 | $1.9 \times 10^{-3}$ | $5.7 \times 10^6$ |
| **Helium** | 4 | $1.1 \times 10^{-3}$ | $3.3 \times 10^6$ |
| **Methane** | 16 | $7.8 \times 10^{-4}$ | $2.3 \times 10^6$ |
| **Nitrogen** | 28 | $6.0 \times 10^{-4}$ | $1.8 \times 10^6$ |
| **Carbon Dioxide** | 44 | $4.4 \times 10^{-4}$ | $1.3 \times 10^6$ |

The NPC films showed a high gas selective thanks to its small diameter nanopores which led to gas transport in the Knudsen flow regime.

The Knudsen transport regime is characterized by a molecular diffusion where the mean free path, $\lambda$, of the molecules is larger than the pore diameter, and therefore the molecule-wall collisions are more frequent than molecule-molecule collisions.

In the Knudsen regime, molecular diffusivity is defined by Eq. 3:

$$D_{Kn} = \frac{97}{2} \, d_p \, \sqrt{\frac{T}{MW}} \qquad \text{Eq. 3}$$

Where $d_p$ is the pore diameter, $\tau$ the temperature, and *MW* the molecular weight of the gas.

Since $D_{Kn}$ is inversely proportional to *MW*, the lighter molecules travel faster than the heavier molecules. Based on this, the gas permeance results in Table 1 indicate transport in the Knudsen regime. Resulting molecular selectivity between gases A and B, $S_{A/B}$ is given by Eq. 4.

$$S_{A/B} = \sqrt{\frac{MW_B}{MW_A}}$$

Eq. 4

The Theoretical and measured Knudsen molecular selectivity between gases A and B, $S_{A/B}$ are shown in Table 2 and 3, respectively.

**Table 2.** Theoretical Knudsen selectivities, $S_{A/B}$ between several gas pairs. Here, B is listed in column and A is listed in row.

| B | $S_{A/B}$ for A as | | | | |
|---|---|---|---|---|---|
| | $H_2$ | He | $CH_4$ | $N_2$ | $CO_2$ |
| $H_2$ | 1.0 | | | | |
| He | 1.4 | 1.0 | | | |
| $CH_4$ | 2.8 | 2.0 | 1.0 | | - |
| $N_2$ | 3.7 | 2.6 | 1.3 | 1.0 | |
| $CO_2$ | 4.7 | 3.3 | 1.7 | 1.3 | 1.0 |

**Table 3.** Measured Knudsen selectivities, $S_{A/B}$ between several gas pairs from the LDT supported NPC film at room temperature. Here, B is listed in column and A is listed in row.

| B | $S_{A/B}$ for A as | | | | |
|---|---|---|---|---|---|
| | $H_2$ | He | $CH_4$ | $N_2$ | $CO_2$ |
| $H_2$ | 1.0 | | | | |
| He | 1.8 | 1.0 | | | |
| $CH_4$ | 2.4 | 1.4 | 1.0 | | |
| $N_2$ | 3.2 | 1.8 | 1.3 | 1.0 | |
| $CO_2$ | 4.3 | 2.4 | 1.8 | 1.4 | 1.0 |

As one can see $S_{A/B}$ from the LDT supported NPC film shown in Table 3 is remarkably close to the theoretical $S_{A/B}$ in Table 2, confirming that the 10-20 nm diameter nanopores in the NPC film led to transport in the Knudsen regime. Moreover, the high selectivities indicate that the NPC film was defect-free.

According to the Knudsen flux derivation the following equation hold true:

$$\frac{J_{T1}}{J_{T2}} = \sqrt{\frac{T_2}{T_1}}$$

Eq. 5

According to the Knudsen transport regime, permeance at higher temperature needs to be smaller than the permeance at room temperature.

The gas permeance at elevated temperatures further confirmed Knudsen transport through the NPC film. As expected in the Knudsen transport, gas permeance decreased upon increasing the temperature. Moreover, the temperature dependent permeance test revealed that membranes were stable at least up to 250°C. At 300 °C, gas permeance increased for all gases, indicating formation of minor cracks in the film.

| Temperature [$^\circ$C] | Gas | Permeance (mol/m$^2$-s-Pa) |
|---|---|---|
| 25 | $N_2$ | $1.7 \times 10^{-3}$ |
| 25 | $H_2$ | $4.4 \times 10^{-3}$ |
| 25 | $CO_2$ | $1.2 \times 10^{-3}$ |
| 100 | $N_2$ | $1.5 \times 10^{-3}$ |
| 200 | $N_2$ | $8.4 \times 10^{-4}$ |
| 215 | $N_2$ | $8.1 \times 10^{-4}$ |
| 215 | $H_2$ | $2.3 \times 10^{-3}$ |
| 215 | $CO_2$ | $7.4 \times 10^{-4}$ |
| 250 | $N_2$ | $8.0 \times 10^{-4}$ |
| 250 | $H_2$ | $1.9 \times 10^{-3}$ |
| 250 | $CO_2$ | $6.7 \times 10^{-4}$ |
| 300 | $N_2$ | $2.6 \times 10^{-3}$ |
| 300 | $H_2$ | $6.5 \times 10^{-3}$ |
| 300 | $CO_2$ | $2.0 \times 10^{-3}$ |

**Table 4**. Gas permeances across LDT supported NPC film at elevated temperatures

Fig. 9 compares the $H_2/CO_2$ selectivity and the $H_2$ permeance of the NPC film at room temperature with several other membranes reported in the literature. Barring a two-atom thick bilayer graphene membrane, the permeance of the NPC membrane is several orders of magnitude higher than any other membrane in the literature. The nanopores in bilayer graphene membrane were individually drilled using a high-energy FIB. The FIB drilling based nanopore preparation technique is a convenient for fundamental studies, however, it is expensive, time-consuming and not scalable to a large area. In comparison, the fabrication and the transfer of the NPC film is straightforward and scalable. The $H_2/CO_2$ selectivity of the NPC film is comparable to those from the polymeric membranes.

The high molecular flux and the small nanopores of the NPC film make it attractive for many other applications in separations including but not limited to the nanofiltration of water for removal of contaminants, extraction of expensive macromolecules and dyes dissolved in aqueous and organic media, etc. in the chemical, petrochemical and pharmaceutical industries.

Application example

The example shows another application of the NPC film as a high-flux support for the microporous MOF film. The framework demonstrated here is ZIF-8, which has been shown as a promising platform for separation of gases including $H_2/CO_2$, $CO_2/CH_4$ and propylene/propane.

Fig. 10a and 10b are SEM images of a thin ZIF-8 film which was directly fabricated on the LDT supported NPC film by the electrophoretic deposition (EPD) technique. Before the deposition, the ZIF-8 precursor solution was prepared by mixing $Zn(NO_3)_2$ and 2-methylimidazole in methanol. Then, both a Cu foil (working electrode) and a LDT supported NPC film (counter electrode) were soaked in the precursor solution to perform EPD with a working voltage of 1.5 V. After 2 min of EPD, the NPC film was left in the solution for additional 2 h to proceed secondary growth. Finally, the LDT supported NPC film was rinsed with methanol, and dried at a vacuum oven. The X-ray diffraction (XRD) pattern of a ZIF-8 film on the NPC film and the Cu foil show excellent crystallinity of the ZIF-8 film as one can see in Fig. 11.

The film was pressure tested to a ΔP of 4 bar, where it retained its transport properties, indicating mechanical stability at the elevated pressures.

While the embodiments have been described in conjunction with a number of embodiments, it is evident that many alternatives, modifications and variations would be or are apparent to those of ordinary skill in the applicable arts. This for example particularly the case regarding the different apparatuses which can be used.

**Claims**

1. Nanoporous carbon membrane manufacturing method comprising:

   - a coating step comprising coating a block copolymer film on a sacrificial non-porous substrate so as to prepare a block copolymer film coated foil, wherein said block copolymer film is poly(styrene-b-4-vinyl pyridine) and comprises of hydrophilic and hydrophobic blocks,
   - a pyrolysis step comprising pyrolyzing the block copolymer film at a temperature higher than 400 °C in an inert atmosphere to form a nanoporous carbon film,
   - a transfer step comprising transferring said nanoporous carbon film on a porous support,

   **characterized in that** the transfer step consists of a wet-transfer process comprising the steps of

   - placing the nanoporous carbon film coated foil in an etchant bath in an etching chamber and the porous support within said etching chamber above the height of said etching bath,
   - etching the underlying sacrificial foil of nanoporous carbon film coated foil,
   - raising the height of the etching bath above the porous support once the sacrificial foil etching is completed, and
   - bringing the free-floating etched nanoporous carbon film on top of the porous support,
   - lowering the etching bath height below the porous support height so as to deposit the etched nanoporous carbon film on top of the porous support.

2. Method according to claim 1, **characterized in that** it further comprises a dissolving step prior to the coating step wherein the block copolymer is dissolved in an organic solvent at a concentration of 1-20 % to form a coating solution.

3. Method to claim 1 or 2, **characterized in that** it further comprises a homopolymer adding step prior to the coating step and comprising adding a homopolymer to the coating solution and then heating the coating solution.

4. Method according to any one of claims 1 to 3, **characterized in that** the coating step is followed by a cooling step presenting a cooling rate of 1 °C/minute or lower.

5. Method according to any one of claims 1 to 4, **characterized in that** the etchant bath is a sodium persulfate solution, 20% w/w.

6. Method according to any one of claims 1 to 5, **characterized in that** the sacrificial substrate is at least one of a Copper foil or a metal foil, a semiconducting element wafer and ceramics.

7. Method according to any one of claims 1 to 6, **characterized in that** the sacrificial substrate is a 25 μm thick Copper foil.

8. Crack-free nanoporous carbon membrane manufactured by the method of any one of claims 1-7.

9. Crack-free nanoporous carbon membrane according to claim 8, **characterized in that** the NPC film presents a thickness of 10-500 nm as determined by an FEI Teneo scanning electron microscope (SEM) with a high-resolution field emission column and a high-stability Schottky field emission gun.

10. Crack-free nanoporous carbon membrane according to claim 8 or 9, **characterized in that** the NPC film presents a pore diameter in the range of 10-50 nm covering more than 50% of the NPC film area as determined by an FEI Teneo scanning electron microscope (SEM) with a high-resolution field emission column and a high-stability Schottky field emission gun.

11. Crack-free nanoporous carbon membrane according to any one of claims 8 to 10, **characterized in that** the porous support is a laser drilled tungsten support with pore size 5-100 microns as determined by an FEI Teneo scanning electron microscope (SEM) with a high-resolution field emission column and a high-stability Schottky field emission gun.

12. Crack-free nanoporous carbon membrane according to claim 11, **characterized in that** the laser drilled tungsten support is 50 $\mu$m thick.

**Patentansprüche**

1. Verfahren zur Herstellung einer nanoporösen Kohlenstoffmembran, umfassend:

   - einen Schritt der Beschichtung, umfassend die Beschichtung eines Block-Copolymer-Films auf ein nicht-poröses Opfersubstrat, um eine mit einem Block-Copolymer-Film beschichtete Folie herzustellen, wobei der Block-Copolymer-Film Poly(styrol-b-4-vinylpyridin) ist und aus hydrophilen und hydrophoben Blöcken gebildet ist,
   - einen Schritt der Pyrolyse, umfassend das Pyrolysieren des Block-Copolymer-Films bei einer Temperatur von mehr als 400 °C in einer inerten Atmosphäre, um einen nanoporösen Kohlenstoff-Film zu bilden,
   - einen Schritt der Übertragung, umfassend das Übertragen des nanoporösen Kohlenstoff-Films auf einen porösen Träger,

   **dadurch gekennzeichnet, dass** der Übertragungsschritt aus einem Nass-Übertragungs-Verfahren besteht, das die folgenden Schritte umfasst:

   - Platzieren der mit dem nanoporösen Kohlenstoff-Film beschichteten Folie in ein Ätzbad in einer Ätzkammer, und des porösen Trägers innerhalb der Ätzkammer über der Höhe des Ätzbads,
   - Wegätzen der unten liegenden Opferfolie von der mit dem nanoporösen Kohlenstoff-Film beschichteten Folie,
   - Anheben der Höhe des Ätzbads über den porösen Träger, sobald das Ätzen der Opferfolie abgeschlossen ist, und
   - Bringen des frei schwimmenden, geätzten nanoporösen Kohlenstoff-Films nach oben auf den porösen Träger,
   - Absenken der Höhe des Ätzbads unter die Höhe des porösen Trägers, um den geätzten nanoporösen Kohlenstoff-Films oben auf dem porösen Träger abzulegen.

2. Verfahren nach Anspruch 1, **dadurch gekennzeichnet, dass** es ferner einen Schritt zur Auflösung vor dem Schritt der Beschichtung umfasst, in welchem das Block-Copolymer in einem organischen Lösungsmittel bei einer Konzentration von 1-20 % aufgelöst wird, um eine Beschichtungslösung zu bilden.

3. Verfahren nach Anspruch 1 oder 2, **dadurch gekennzeichnet, dass** es ferner einen Schritt der Zugabe eines Homopolymers vor dem Schritt der Beschichtung umfasst, der das Hinzufügen eines Homopolymers zu der Beschichtungslösung und anschließend die Erwärmung der Beschichtungslösung umfasst.

4. Verfahren nach einem der Ansprüche 1 bis 3, **dadurch gekennzeichnet, dass** auf den Schritt der Beschichtung ein Schritt zur Kühlung folgt, der eine Kühlrate von 1 °C/Minute oder darunter aufweist.

5. Verfahren nach einem der Ansprüche 1 bis 4, **dadurch gekennzeichnet, dass** das Ätzbad eine Natriumpersulfat-Lösung mit 20 % w/w ist.

6. Verfahren nach einem der Ansprüche 1 bis 5, **dadurch gekennzeichnet, dass** das Opfersubstrat zumindest eine Kupferfolie oder eine Metallfolie, oder ein Wafer aus eine Halbleiterelement oder Keramik ist.

7. Verfahren nach einem der Ansprüche 1 bis 6, **dadurch gekennzeichnet, dass** das Opfersubstrat eine 25 $\mu$m dicke Kupferfolie ist.

8. Rissfreie nanoporöse Kohlenstoffmembran, hergestellt durch das Verfahren nach einem der Ansprüche 1-7.

9. Rissfreie nanoporöse Kohlenstoffmembran nach Anspruch 8, **dadurch gekennzeichnet, dass** der NPC-Film eine Dicke von 10-500 nm aufweist, bestimmt durch ein Rasterelektronenmikroskop (SEM) von FEI Teneo mit einer hochauflösenden Feldemissions-Säule und einer hochstabilen Schottky-Feldemissions-Quelle.

10. Rissfreie nanoporöse Kohlenstoffmembran nach Anspruch 8 oder 9, **dadurch gekennzeichnet, dass** der NPC-Film einen Porendurchmesser in dem Bereich von 10-50 nm aufweist und mehr als 50 % der Fläche des NPC-Films bedeckt, bestimmt durch ein Rasterelektronenmikroskop (SEM) von FEI Teneo mit einer hochauflösenden Feldemissions-Säule und einer hochstabilen Schottky-Feldemissions-Quelle.

11. Rissfreie nanoporöse Kohlenstoffmembran nach einem der Ansprüche 8 bis 10, **dadurch gekennzeichnet, dass** der poröse Träger ein lasergebohrter Wolframträger mit einer Porengröße 5-100 Mikrometer ist, bestimmt durch ein Rasterelektronenmikroskop (SEM) von FEI Teneo mit einer hochauflösenden Feldemissions-Säule und einer hochstabilen Schottky-Feldemissions-Quelle.

12. Rissfreie nanoporöse Kohlenstoffmembran nach Anspruch 11, **dadurch gekennzeichnet, dass** der lasergebohrte Wolframträger 50 μm dick ist.


## Revendications

1. Procédé de fabrication d'une membrane de carbone nanoporeuse comprenant

   - une étape de revêtement consistant à revêtir un film de copolymère à blocs sur un substrat sacrificiel non poreux de manière à préparer une feuille enduite d'un film de copolymère à blocs, dans laquelle ledit film de copolymère à blocs est un poly(styrène-b-4-vinyl pyridine) et comprend des blocs hydrophiles et hydrophobes,
   - une étape de pyrolyse comprenant de pyrolyser le film de copolymère à blocs à une température supérieure à 400 °C dans une atmosphère inerte pour former un film de carbone nanoporeux,
   - une étape de transfert consistant à transférer ledit film de carbone nanoporeux sur un support poreux,

   **caractérisé en ce que** l'étape de transfert consiste en un procédé de transfert par voie humide comprenant les étapes suivantes

   - placer la feuille recouverte du film de carbone nanoporeux dans un bain d'attaque chimique dans une chambre d'attaque chimique et le support poreux dans ladite chambre d'attaque chimique au-dessus de la hauteur dudit bain d'attaque chimique,
   - graver la feuille sacrificielle sous-jacente de la feuille revêtue d'un film de carbone nanoporeux,
   - élever la hauteur du bain d'attaque chimique au-dessus du support poreux une fois que l'attaque chimique de la feuille sacrificielle est terminée, et
   - amener le film de carbone nanoporeux chimiquement attaqué flottant librement, au-dessus du support poreux,
   - abaisser la hauteur du bain d'attaque chimique au-dessous de la hauteur du support poreux de manière à déposer le film de carbone nanoporeux chimiquement attaqué sur le support poreux.

2. Procédé selon la revendication 1, **caractérisé en ce qu'**il comprend en outre une étape de dissolution avant l'étape de revêtement dans laquelle le copolymère à blocs est dissous dans un solvant organique à une concentration de 1 à 20 % pour former une solution de revêtement.

3. Procédé selon la revendication 1 ou 2, **caractérisé en ce qu'**il comprend en outre une étape d'ajout d'homopolymère avant l'étape de revêtement et comprenant l'ajout d'un homopolymère à la solution de revêtement et ensuite le chauffage de la solution de revêtement.

4. Procédé selon l'une quelconque des revendications 1 à 3, **caractérisé en ce que** l'étape de revêtement est suivie d'une étape de refroidissement présentant une vitesse de refroidissement inférieure ou égale à 1°C/minute.

5. Procédé selon l'une quelconque des revendications 1 à 4, **caractérisé par le fait que** le bain d'attaque chimique est une solution de persulfate de sodium à 20 % en poids.

6. Procédé selon l'une quelconque des revendications 1 à 5, **caractérisé par le fait que** le substrat sacrificiel est au moins l'un des substrats suivants : une feuille de cuivre ou une feuille métallique, une plaquette d'élément semi-conducteur et des céramiques.

**7.** Procédé selon l'une des revendications 1 à 6, **caractérisé par le fait que** le substrat sacrificiel est une feuille de cuivre de $25\mu\mu$ d'épaisseur.

**8.** Membrane de carbone nanoporeuse sans fissure fabriquée selon le procédé de l'une des revendications 1 à 7.

**9.** Membrane de carbone nanoporeuse sans fissure selon la revendication 8, **caractérisée par le fait que** le film NPC présente une épaisseur de 10-500 nm déterminée par un microscope électronique à balayage (MEB) FEI Teneo avec une colonne d'émission de champ à haute résolution et un pistolet d'émission de champ Schottky à haute stabilité.

**10.** Membrane de carbone nanoporeuse sans fissure selon la revendication 8 ou 9, **caractérisée par le fait que** le film NPC présente un diamètre de pore de l'ordre de 10-50 nm couvrant plus de 50 % de la surface du film NPC, tel que déterminé par un microscope électronique à balayage (MEB) FEI Teneo avec une colonne d'émission de champ à haute résolution et un pistolet d'émission de champ Schottky à haute stabilité.

**11.** Membrane de carbone nanoporeuse sans fissure selon l'une des revendications 8 à 10, **caractérisée par le fait que** le support poreux est un support en tungstène percé au laser dont la taille des pores est comprise entre 5 et 100 microns, comme déterminé par un microscope électronique à balayage (MEB) FEI Teneo avec une colonne d'émission de champ à haute résolution et un pistolet d'émission de champ Schottky à haute stabilité.

**12.** Membrane de carbone nanoporeuse sans fissure selon la revendication 11, **caractérisée par le fait que** le support de tungstène percé au laser a une épaisseur de $50\mu$m.

**Figure 1**

**Figure 2**

**Figure 3**

**Figure 4**

**Figure 5**

Figure 6

Wet transfer of NPC film to the LDT support

Figure 7i

**Figure 7ii**

**Figure 8**

**Figure 9**

**Figure 10**

**Figure 11**

**EP 3 600 636 B1**

**Patent documents cited in the description**

- WO 2007024241 A2